## Europäisches Patentamt
## European Patent Office
## Office européen des brevets

(19)

(11) Veröffentlichungsnummer : **0 033 369**
**B1**

.(12)

# EUROPÄISCHE PATENTSCHRIFT

(45) Veröffentlichungstag der Patentschrift :
**16.02.83**

(51) Int. Cl.³ : **G 02 B 23/16**, G 01 C 1/02

(21) Anmeldenummer : **80107248.9**

(22) Anmeldetag : **20.11.80**

(54) **Anordnung zur spannungsfreien Lagerung einer Welle für die Elevationsbewegung eines optischen Gerätes.**

(30) Priorität : **01.02.80 CH 831/80**

(43) Veröffentlichungstag der Anmeldung :
**12.08.81 Patentblatt 81/32**

(45) Bekanntmachung des Hinweises auf die Patenterteilung : **16.02.83 Patentblatt 83/07**

(84) Benannte Vertragsstaaten :
**AT BE CH DE FR GB IT LI NL SE**

(56) Entgegenhaltungen :
**CH A 345 204**
**CH A 474 047**
**FR A 2 234 808**
**GB A 1 043 686**

(73) Patentinhaber : **CONTRAVES AG**
**Schaffhauserstrasse 580**
**CH-8052 Zürich (CH)**

(72) Erfinder : **Hess, Willy**
**Bleierweg 7**
**CH-8942 Oberrieden (CH)**.

(74) Vertreter : **Althoff, Gerhard et al**
**Patentanwälte H. Mitscherlich, K. Gunschmann**
**Dr. W. Körber, J. Schmidt-Evers Steinsdorf-strasse 10 D-8000 München 22 (DE)**

Anordnung zur spannungsfreien Lagerung einer Welle für die Elevationsbewegung eines optischen Gerätes

Die Erfindung betrifft eine Anordnung zur spannungsfreien Lagerung einer in einem ersten Gehäuse gelagerten und motorisch angetriebenen, mit dem Innenring eines Wälzlagers drehfest verbundenen Welle für die Elevationsbewegung eines zwischen dem ersten und einem zweiten Gehäuse angeordneten und um die Längsachse der Welle schwenkbaren optischen Gerätes, insbesondere für das Teleskop eines Flugbahnvermessungs- und Beobachtungstheodoliten.

Bei einem Vermessungstheodoliten gemäss der CH-A 474 047 ist es bekannt, zwischen zwei im Abstand zueinander angeordneten und auf einem Jochelement befestigten Gehäusen ein um eine horizontal ausgerichtete Elevationsachse schwenkbar gelagertes Teleskop und wahlweise an den Seiten der Gehäuse zusätzlich einen oder mehrere optische Empfänger für IR-, Laser- oder andere Strahlung sowie ein Richtfernrohr anzuordnen, wobei die Elevationsbewegung des Teleskopes, der Empfänger und des Objektivs vom Richtfernrohr durch eine in den Gehäusen gelagerte, motorisch angetriebene Welle erreicht wird.

Zum Stand der Technik ist ferner die CH-A 345 204 — bei welcher zur Aufnahme radialsymmetrischer Kräfte zwischen dem Aussenring eines auf einer Welle sitzenden Wälzlagers und der Innenwandung einer Bohrung ein federelastisches Zwischenelement angeordnet ist —, sowie die GB-A 1 043 686 — bei welcher zur Aufnahme radial wirkender Kräfte zwischen dem Aussenring eines auf einer Welle sitzenden Wälzlagers und der Innenwandung einer in einem Gehäuse vorgesehenen Bohrung ein Spalt und zu beiden Seiten des Wälzlagers je ein am Aussenring sowie am Gehäuse befestigter Federring vorgesehen ist —, und letztendlich die FR-A 2 234 808 — bei welcher zur elastischen Lagerung eines im wesentlichen von einem Motor angetriebenen Rotationskörpers beispielsweise ein aus radial im Abstand zueinander angeordneten, segmentartig ausgebildeten und durch Stege miteinander verbundenen Ringteilen gebildetes Zwischenelement vorgesehen ist — zu erwähnen.

Der Erfindung liegt die Aufgabe zugrunde, die Welle in dem Gehäuse derart zu lagern, dass die im Betriebszustand durch extreme Temperaturunterschiede — möglicher Betriebstemperaturbereich − 25 °C bis + 50 °C — auftretenden Spannungen zwischen dem Leichtmetall-Gehäuse und dem Stahl-Lager nicht auf die Lager-Laufflächen übertragen werden und dort durch Deformation zu erhöhter Reibung oder Verschiebung der ausgerichteten Elevationsachse führen.

Diese Aufgabe wird erfindungsgemäss dadurch gelöst, dass der Aussenring des Wälzlagers mit einem Flanschteil in axialer Richtung der Welle gesehen seitlich an einer radial nach innen gerichteten und von einer Oeffnung durchdrungenen Wand des Gehäuses angeordnet und an mindestens drei gleichmässig an der Wand verteilt angeordneten, radial wirkenden Federelementen befestigt ist.

Durch die am Umfang der Gehäusewand angeordneten, als Federstab wirkenden Befestigungs- und Federelemente ist es sichergestellt, dass sowohl bei extremen klimatischen Bedingungen als auch bei Verwendung verschiedener Materialien mit unterschiedlichen Ausdehnungskoeffizienten der miteinander zu verbindenden Teile — beispielsweise ein aus gehärtetem Stahl bestehender Wälzlager-Aussenring mit der aus Leichtmetall bestehenden Wand des Gehäuses — keine störenden Kräfte auf die Lager übertragen werden. Die einzelnen Federelemente bewirken je nach Temperaturbereich eine Bewegung zum Zentrum hin oder vom Zentrum weg, wobei die unmittelbar mit der Bewegung zusammenhängenden Federkräfte durch entsprechende Dimensionierung der Federstäbe erreicht wird.

Die Erfindung wird nachstehend anhand eines Ausführungsbeispiels in Verbindung mit der Zeichnung näher beschrieben. Es zeigt:

Figur 1 eine perspektivisch dargestellte Ansicht eines im wesentlichen aus einem Messteil und einem Stativteil bestehenden Theodoliten,

Figur 2 das in Ansicht und teilweise im Schnitt dargestellte Messteil des Theodoliten gemäss Fig. 1 mit einem zwischen zwei Gehäuseblöcken angeordneten, schwenkbar gelagerten Teleskop,

Figur 3 einen im Schnitt und in grösserem Massstab dargestellten Ausschnitt der in Fig. 2 durch einen Kreis bezeichneten Stelle N mit einer in dem einen Gehäuseblock gelagerten Antriebswelle für die Elevationsbewegung des Teleskopes, und

Figur 4 einen Schnitt gemäss der Linie IV-IV in Fig. 3.

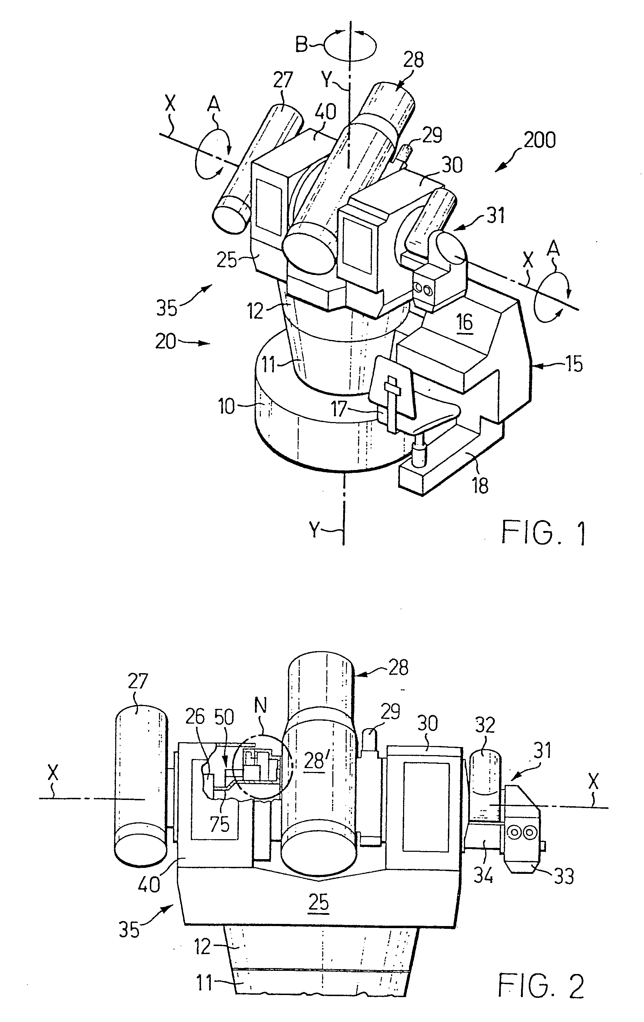

Fig. 1 zeigt eine perspektivische Ansicht eines Zielverfolgungs- und Zielvermessungsgerätes, insbesondere eines Kinotheodoliten 200, welcher im wesentlichen aus einem Stativteil 20 und einem Messteil 35 besteht.

Das Stativteil 20 umfasst ein feststehendes, auf einem nicht dargestellten Fundament befestigtes Sockelelement 10, ein drehendes Stativelement 11 und ein Zwischenelement 12. Seitlich an dem Stativelement 11 ist ein im wesentlichen aus einem Bedienungspult 16, einem Sitz 17 und einer Fussplattform 18 bestehender Richterstand 15 angeordnet und mit nicht dargestellten Mitteln befestigt. Das Stativelement 11 mit dem Richterstand 15 sowie das Messteil 35 sind in Bezug auf das feststehende Sockelelement 10 mittels je eines entsprechend zugeordneten, nicht dargestellten Antriebs-Aggregates wie in Fig. 1 dargestellt, um eine vertikale Achse Y-Y in Pfeilrichtung B drehbar. Die Drehbewegung des Messteils 35 in Bezug auf die Drehbewegung des Richterstandes 15 erfolgt vorzugsweise als Synchronbewegung.

Das Messteil 35 umfasst ein Jochelement 25, auf welchem im Abstand zueinander angeordnet ein erster Gehäuseblock 40 sowie ein zweiter Gehäuseblock 30 mit nicht dargestellten Mitteln befestigt ist. Seitlich an dem ersten Gehäuseblock 40 ist vorzugsweise ein optischer Empfänger beziehungsweise Sender 27 für IR-, Laser-, visible oder andere Strahlung vorgesehen. Zwischen den beiden Gehäusen 40 und 30 ist ein Teleskop 28 angeordnet und schwenkbar gelagert. Seitlich an dem zweiten Gehäuse 30 ist ein dem Richterstand 15 zugeordnetes Richtfernrohr 31 vorgesehen. An dem zwischen den beiden Gehäusen 30, 40 schwenkbar gelagerten Teleskoprohr 28' des Teleskopes 28 ist vorzugsweise auf der dem Gehäuse 30 zugewandten Seite eine Fernsehkamera 29 angeordnet und befestigt. Mittels der Signale (TV-beziehungsweise IRtracking) aus der Fernsehkamera 29 oder des IR-Empfängers 27 wird die Steuerung der Zielverfolgung des Theodoliten 200 erreicht.

In Fig. 2 ist in Ansicht und teilweise im Schnitt das Messteil 35 in grösserem Massstab dargestellt und man erkennt den IR-Empfänger 27, eine im Gehäuse 40 angeordnete, schematisch dargestellte Winkelmessvorrichtung 26, das Gehäuse 40, das Teleskop 28 mit der Fernsehkamera 29, das zur Aufnahme nicht dargestellter Optikelemente ausgebildete Gehäuse 30 sowie das Richtfernrohr 31. Das Richtfernrohr 31 besteht im wesentlichen aus einem schwenkbaren Objektiv 32, einem Okularkörper 33 sowie einem zur Aufnahme und Befestigung des schwenkbaren Objektivs 32 beispielsweise U-förmig ausgebildeten und am Gehäuse 30 angeflanschten Tragkörper 34.

Der Empfänger 27, das Teleskop 28 mit der Kamera 29 sowie das zwischen den beiden Schenkeln des Tragkörpers 34 gelagerte Objektiv 32 sind zusammen um eine horizontal orientierte Achse, vorzugsweise um eine gemeinsame, horizontale Kippachse X-X schwenkbar. Ein in dem Gehäuse 40 angeordnetes, schematisch dargestelltes Antriebs-Aggregat 50 bewirkt die Elevationsbewegung der Teile 27, 28, 29 und 32 wie in Fig. 1 dargestellt um die Kippachse X-X in Pfeilrichtung A.

Durch die Elevationsbewegung A wird gleichzeitig die Winkelmess-Vorrichtung 26 angetrieben, welche dazu bestimmt und ausgebildet ist, in Form elektrischer Ausgangssignale entweder dauernd die momentane Elevationsstellung des Teleskopes 28 in bezug auf eine vorgegebene Bezugsstellung oder aber zählbare Veränderungs-Schritte des Elevationswinkels zu erzeugen.

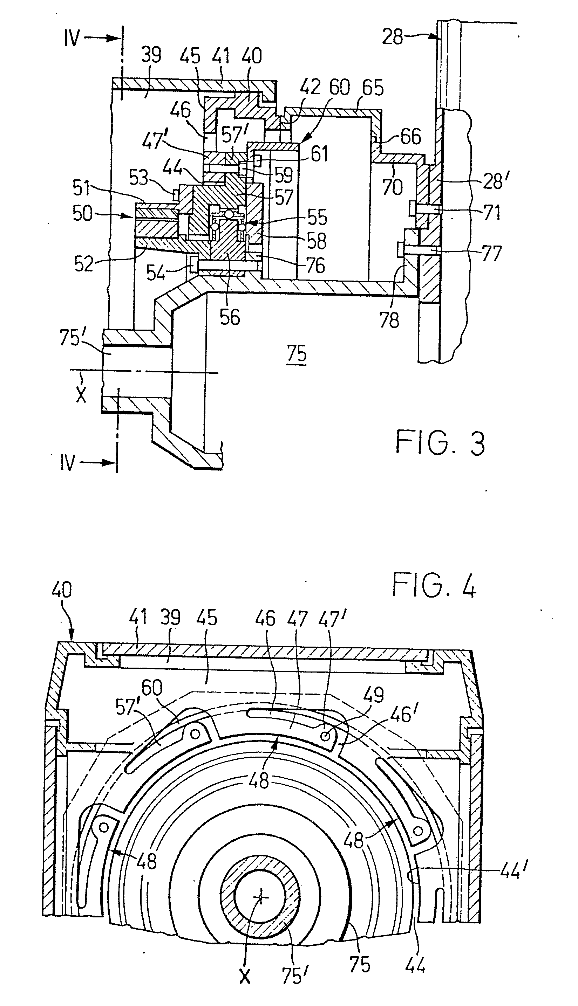

In Fig. 3 ist in grösserem Massstab und im Schnitt die in Fig. 2 durch einen Kreis bezeichnete Stelle N dargestellt und man erkennt ein Teilstück des an der oberen Seite durch eine abnehmbare Abdeckung 41 verschlossenen Gehäuses 40, ein an der Stirnseite 42 des Gehäuses mit nicht dargestellten Mitteln befestigtes erstes Gehäuseteil 65 und ein zweites Gehäuseteil 70. Das zweite Gehäuseteil 70 ist mittels Schrauben 71 an dem Teleskoprohr 28' des im Abstand zum Gehäuse 40 angeordneten und teilweise im Schnitt dargestellten Teleskopes 28 befestigt und zusammen mit dem Teleskop wie in Fig. 1 dargestellt um die horizontale Achse X-X in Pfeilrichtung A schwenkbar. Die beiden Gehäuseteile 65, 70 sind an ihrer Nahtstelle 66 durch eine einfache, nicht näher dargestellte Labyrinthdichtung abgedichtet.

In dem Gehäuse 40 ist eine abgesetzt ausgebildete Antriebswelle 75 drehbar gelagert. Die Welle 75 weist auf der dem Teleskop 28 zugewandten Seite einen ersten Flansch 78 auf und ist mittels am Umfang verteilt angeordneter Schrauben 77 mit dem Teleskoprohr 28' drehfest verbunden. Im Abstand zu dem ersten Flansch 78 ist in axialer Richtung gesehen ein weiterer, zur Befestigung der Antriebselemente ausgebildeter Flansch 76 vorgesehen.

Im Abstand zu der als Anschlussfläche für das Gehäuseteil 65 ausgebildeten Stirnfläche 42 weist das Gehäuse 40 eine nach innen gerichtete Wand 45 auf, welche von einer Oeffnung 44 durchdrungen ist. Ein Wälzlager 55 ist mit einem am Aussenring 57 angeformten Flanschteil 57' und durch Schrauben 59 mit der Wand 45 fest verbunden und mit einem Innenring 56 auf der Welle 75 zentriert und gelagert.

Das schematisch dargestellte Wälzlager 55 besteht im wesentlichen aus dem Aussen- und Innenring sowie einer im wesentlichen die beiden Ringe zusammenhaltenden und mit nicht dargestellten Mitteln am Aussenring 57 befestigten, ringförmigen Scheibe 58. Zur Aufnahme radialer und axialer Lagerkräfte ist in radialer Richtung zwischen dem Innen- und Aussenring eine erste schematisch dargestellte Kugelbahn und in axialer Richtung zu beiden Seiten des Innenrings 56 je eine weitere, auf der einen Seite durch den Aussenring 57 und auf der anderen Seite durch die Scheibe 58 positionierte schematisch dargestellte Kugelbahn angeordnet. Das Wälzlager 55 weist aufgrund der besonderen Ausbildung und Anordnung der in radialer und axialer Richtung angeordneten Kugelbahnen einen relativ kleinen Reibungswiderstand auf.

Auf der einen Seite des Wälzlagers 55 ist ein schematisch dargestelltes Antriebs-Aggregat 50 angeordnet, welches unter anderem ein feststehendes, erstes Ringelement 51 und ein angetriebenes, zweites Ringelement 52 aufweist. Das erste Ringelement 51 ist mittels gleichmässig am Umfang verteilt angeordneter Schrauben 53 mit dem Aussenring 57 des Wälzlagers 55 wirkverbunden. Das angetriebene, zweite Ringelement 52 ist mittels gleichmässig am Umfang verteilter, das Ringelement 52, den Innenring 56 des Wälzlagers sowie den zweiten Flansch 76 der Welle 75 durchdringenden Schrauben 54 wirkverbunden.

Auf der anderen Seite des Wälzlagers 55 ist eine mittels am Umfang verteilt angeordneter Schrauben 61 am Flanschteil 57' des Aussenringes 57 befestigte und schematisch dargestellte Winkelmesseinrichtung 60 für die Elevationsbewegung in Pfeilrichtung A angeordnet.

In Fig. 4 ist ein Teilstück des Gehäuses 40 im Schnitt gemäss der Linie IV-IV in Fig. 3 dargestellt und man erkennt die einen Durchbruch 39 zum Gehäuseinneren verschliessende Abdeckung 41, die nach innen gerichtete Wand 45 mit der Oeffnung 44, die teilweise sichtbare äussere Kante des Flanschteils 57' sowie die äussere Kante der Winkelbegrenzungs-Einrichtung 60 und ein Teilstück 75' der Welle 75.

Die zur Befestigung des Wälzlager-Aussenringes 57 ausgebildete Wand 45 ist an der kreisförmigen Innenseite 44' der Oeffnung 44 mit am Umfang verteilt angeordneten, kreisförmig verlaufenden Federelementen 48 versehen, welche durch einen der Innenseite 44' entsprechenden Kreisbogen begrenzt werden, dessen Mittelpunkt auf der Drehachse X der Welle 75 liegt. Jedes einzelne Federelement 48 ist durch einen Federstab 47, eine im wesentlichen parallel zu der Innenseite 44' verlaufende Aussparung 46 sowie durch einen quer dazu angeordneten, die Federelemente 48 trennenden Schlitz 46' gebildet. Der Schlitz 46' unterteilt somit die Federelemente 48 in einzelne Segmente. Der Uebergang der Aussparung 46 zum Schlitz 46' verläuft wie in Fig. 4 dargestellt, vorzugsweise in paralleler Formgebung zu einem im vorderen Bereich jedes Federstabes 47 vorgesehenen Verstärkungsauge 47'. Die je mit einer Bohrung 49, vorzugsweise mit einer Gewindebohrung versehenen Augen 47' der Federstäbe 47 dienen zur Aufnahme der Schrauben 59 für die Befestigung des Wälzlager-Aussenringes 57 an der Wand 45 des Gehäuses 40.

Die Ausbildung des Aussenringes 57 mit dem Flanschteil 57' sowie die in axialer Richtung gesehene, seitliche Anordnung an der Wand 45 hat den Vorteil, dass der Aussenring 57 keinen exakten Pass-Sitz in der Wand 45 erfordert.

Die Schlitze 46' der Federelemente 48 werden vorzugsweise erst nach der Bearbeitung der Verstärkungsaugen 47' — zum Beispiel nach dem Bohren der Gewindelöcher 49 — durch Fräsen oder dergleichen in die Wand 45 eingearbeitet.

In Fig. 3 und Fig. 4 ist als Ausführungsbeispiel die eine Seite des Gehäuses 40 mit der Anordnung der spannungsfreien Lagerung der Welle 75 in der Wand 45 dargestellt und vorgehend ausführlich beschrieben. An dieser Stelle sei jedoch darauf hingewiesen, dass sowohl die andere, dem Empfänger 27 zugewandte und nicht näher dargestellte Wand des Gehäuses 40, als auch die im anderen Gehäuse 30 vorgesehenen, nicht dargestellten Wände zur spannungsfreien Lagerung entsprechender Elemente ausgebildet sein können.

**Ansprüche**

1. Anordnung zur spannungsfreien Lagerung einer in einem ersten Gehäuse gelagerten und motorisch angetriebenen, mit dem Innenring eines Wälzlagers drehfest verbundenen Welle für die Elevationsbewegung eines zwischen dem ersten und einem zweiten Gehäuse angeordneten und um die Längsachse der Welle schwenkbaren optischen Gerätes, insbesondere für das Teleskop eines Flugbahnvermessungs- und Beobachtungstheodoliten, dadurch gekennzeichnet, dass der Aussenring (57) des Wälzlagers (55) mit einem Flanschteil (57') in axialer Richtung der Welle (75) gesehen seitlich an einer radial nach innen gerichteten und von einer Oeffnung (44) durchdrungenen Wand (45) des Gehäuses (40) angeordnet und an mindestens drei gleichmässig an der Wand verteilt angeordneten, radial wirkenden Federelementen (48) befestigt ist.

2. Anordnung nach Anspruch 1, dadurch gekennzeichnet, dass mehrere gleichmässig am Umfang der Oeffnung (44) verteilt angeordnete Federelemente (48) vorgesehen sind, welche durch einen der Innenseite (44') der Oeffnung entsprechenden Kreisbogen begrenzt werden, dessen Mittelpunkt auf der Drehachse (X) der Welle (75) liegt.

3. Anordnung nach Anspruch 1, dadurch gekennzeichnet, dass das Federelement (48) aus einem Federstab (47), einer zu der Innenseite (44') der Oeffnung (44) im wesentlichen parallel in Umfangrichtung verlaufenden Ausnehmung (46) und einem quer dazu angeordneten, die Federelemente (48) trennenden Schlitz (46') gebildet ist.

4. Anordnung nach Anspruch 3, dadurch gekennzeichnet, dass der Federstab (47) des Federelements (48) im vorderen Bereich ein als Auflagefläche und Befestigung für den Aussenring (57) ausgebildetes Verstärkungsauge (47') aufweist.

**Claims**

1. Arrangement for the tension-free mounting of a shaft mounted in a first housing and driven by a motor and rigidly connected to the inner ring of a roller bearing, this shaft being for the elevation movement of an optical device disposed between the first and a second housing and rotatable round the longitudinal axis of the shaft, in particular for the telescope of a flight path measurement- and observation theodolite, characterised in that the outer ring (57) of the roller bearing (55) with a flange part (57') seen in the axial direction of the shaft (75) is arranged laterally on a wall (45) of the housing (40) that is directed radially inwards and is penetrated by an aperture (44), and is secured on at least three spring elements (48) acting radially and arranged to be distributed uniformly on the wall.

2. Arrangement according to claim 1, characterised in that several spring elements (48) arranged to be distributed uniformly on the circumference of the aperture (44) are provided, which elements are limited by an arc corresponding to the inner side (44') of the aperture, the middle point of which arc lies on the axis of rotation (X) of the shaft (75).

3. Arrangement according to claim 1, characterised in that the spring element (48) is formed from a spring bar (47), a recess (46) running in the circumferential direction substantially parallel to the inner side (44') of the aperture (44), and a slot (46') arranged at right angles to the spring element and separating the spring elements (48).

4. Arrangement according to claim 3, characterised in that the spring bar (47) of the spring element (48) has in the front region a reinforcement lug (47') formed as a contact surface and securing means for the outer ring (57).

**Revendications**

1. Dispositif pour la suspension sans contrainte d'un arbre monté dans un premier boîtier et entraîné par un moteur, solidaire en rotation de la cage intérieure d'un palier de roulement pour le mouvement d'élévation d'un appareil optique monté pivotant entre le premier et le second boîtiers autour de l'axe longitudinal de l'arbre, notamment pour le télescope d'un théodolite de mesure et d'observation d'une trajectoire aérienne, caractérisé en ce que la cage extérieure (57) du palier de roulement (55) est prévue par une partie de bride (57'), latéralement lorsque vue dans la direction axiale de l'arbre (75) sur une paroi (45) du boîtier (40), paroi dirigée radialement vers l'intérieur et traversée par un orifice (44), et est fixée sur au moins trois éléments élastiques (48) répartis régulièrement sur la paroi et agissant radialement.

2. Dispositif selon la revendication 1, caractérisé en ce que plusieurs éléments élastiques (48) sont répartis régulièrement à la périphérie de l'ouverture (44), ces éléments étant limités par un arc de cercle correspondant à l'ouverture du côté intérieur (44'), et dont le centre est situé sur l'axe de rotation (X) de l'arbre (75).

3. Dispositif selon la revendication 1, caractérisé en ce que l'élément élastique (48) se compose d'une tige élastique (47), d'une cavité (48) essentiellement parallèle au côté intérieur (44') de l'ouverture (48) dans la direction périphérique et d'une fente (46') transversale, coupant les éléments élastiques (48).

4. Dispositif selon la revendication 3, caractérisé en ce que la tige élastique (47) de l'élément élastique (48) comporte dans sa zone avant, un œillet de renforcement (47') réalisé comme surface d'appui et de fixation de la cage extérieure (57).

FIG. 1

FIG. 2

1

FIG. 3

FIG. 4